# EUROPÄISCHE PATENTSCHRIFT

(11) **EP 4 000 167 B1**
(45) Veröffentlichungstag und Bekanntmachung des Hinweises auf die Patenterteilung: **27.09.2023**
(21) Anmeldenummer: 20771441.1
(22) Anmeldetag: 21.08.2020
(51) Int. Cl.: H02K 15/12

(54) **ISOLIEREN EINER SPULENWICKLUNG EINES AKTIVTEILS EINER ELEKTRISCHEN MASCHINE**
INSULATION OF A COIL WINDING OF AN ACTIVE PART OF AN ELECTRIC MACHINE
ISOLATION D'UN ENROULEMENT DE BOBINE D'UNE PARTIE ACTIVE D'UNE MACHINE ÉLECTRIQUE

(30) Priorität: 11.10.2019 EP 19202757
(43) Veröffentlichungstag der Anmeldung: 25.05.2022
(73) Patentinhaber: Siemens Aktiengesellschaft, 80333 München (DE)
(72) Erfinder: BURGHARD, Matthias Johannes, 12099 Berlin (DE); FESTA, Marco, 14612 Falkensee (DE)
(74) Vertreter: Siemens Patent Attorneys
(86) Internationale Anmeldenummer: PCT/EP2020/073530
(87) Internationale Veröffentlichungsnummer: WO 2021/069138

(56) Entgegenhaltungen:
- GB-A- 654 637
- JP-A- S5 631 356
- JP-B1- S4 811 843

## Beschreibung

Die Erfindung betrifft ein Verfahren zum Isolieren einer Spulenwicklung eines Aktivteils (das heißt eines Stators oder Rotors) einer rotierenden elektrischen Maschine und eine Vorrichtung zur Durchführung des Verfahrens.

Genauer betrifft die Erfindung das Isolieren einer Spulenwicklung eines Aktivteils einer rotierenden elektrischen Maschine, bei dem die Spulenwicklung durch so genanntes Vakuum-Druck-Imprägnieren (engl. Vacuum Pressure Impregnation, abgekürzt VPI) mit einem Isolierharz getränkt wird. Bei dem Vakuum-Druck-Imprägnieren wird das Aktivteil in einem Vakuum zunächst entgast und anschließend in das Isolierharz eingetaucht. Schließlich werden das Isolierharz und das in das Isolierharz eingetauchte Aktivteil einem Überdruck ausgesetzt, um das Isolierharz in die evakuierten, bisher noch nicht mit Isolierharz befüllten Hohlräume des Aktivteils zu drücken. Dabei muss verhindert werden, dass eine größere Menge von Isolierharz nach dem Tränken wieder aus dem Aktivteil herausläuft. Ein Auslaufen des Harzes hat zum einen den Nachteil, schlechtere Isolationswerte zu erzeugen, zum anderen aber dennoch gewichtigeren Nachteil, eine Isolation zu erzeugen, die leicht bei einer schlagartigen Dekompression beschädigt oder zerstört werden kann. Derartige Beschädigungen können durch Lunker in der Isolation entstehen, das heißt durch abgeschlossene Hohlräume, die durch ablaufendes Harz entstanden sind und in die im Betrieb der elektrischen Maschine unter hohem Prozessgasdruck, dem die Maschine ausgesetzt ist, Gas diffundiert und in denen somit dieser hohe Prozessgasdruck herrscht. Bei einem schnellen Druckabfall in der Umgebung der elektrischen Maschine kann das in die Lunker diffundierte Gas nicht schnell genug entweichen, so dass in den Lunkern ein Überdruck durch das dort verbliebene Gas entsteht, der zu einem Aufbrechen beziehungsweise Delaminieren der Isolation führt.

Bei bestimmten Harzen kann ein Auslaufen des Isolierharzes nach dem Tränken durch so einen genannten Beschleuniger reduziert werden, wobei es sich um einen Stoff handelt, der in die zu tränkende Spulenwicklung eingebracht ist und während des Tränkprozesses das Isolierharz gelieren lässt und somit am Auslaufen hindert. Allerdings kann ein derartiger Beschleuniger nicht bei allen Isolierharzen verwendet werden, insbesondere nicht bei speziellen Harzen, die für die Isolation der Wicklungen spezieller schnell laufender elektrischer Maschinen benötigt werden und bei der Kühlung durch Prozessgas unter Hochdruck beständig sein müssen.

Aus der GB 654637 ist ein Verfahren zum Lackieren oder Imprägnieren von elektrischen Wicklungen, wie Wicklungen von Rotoren oder Ankern, mit Isolierlack, der nach dem Imprägnieren im Wesentlichen lösungsmittelfrei ist, bekannt, wobei der Lack vor Abschluss des Imprägnierens eine Lackbasis und ein Lösungsmittel aufweist. Der zu lackierende Gegenstand wird auf eine Temperatur erhitzt, die mindestens hoch genug ist, um Lösungsmittel aus dem Lack zu verdampfen. Der Lack kann ein reines oder modifiziertes Phenol-Formaldehyd-Harz mit Erdölbenzin als Lösungsmittel aufweisen.

Der Erfindung liegt die Aufgabe zugrunde, ein verbessertes Verfahren mit Vakuum-Druck-Imprägnieren zum Isolieren einer Spulenwicklung eines Aktivteils einer rotierenden elektrischen Maschine und eine Vorrichtung zur Durchführung des Verfahrens anzugeben.

Die Aufgabe wird erfindungsgemäß durch ein Verfahren mit den Merkmalen des Anspruchs 1 und eine Vorrichtung mit den Merkmalen des Anspruchs 7 gelöst.

Vorteilhafte Ausgestaltungen der Erfindung sind Gegenstand der Unteransprüche.

Bei dem erfindungsgemäßen Verfahren zum Isolieren einer Spulenwicklung eines Aktivteils einer rotierenden elektrischen Maschine wird das Aktivteil zunächst in einem wannenartigen Tränkbehälter durch Vakuum-Druck-Imprägnieren mit einem Isolierharz getränkt. Anschließend wird der immer noch mit dem Isolierharz befüllte Tränkbehälter zusammen mit dem in ihm angeordneten Aktivteil in einen Ausbackofen eingebracht und das Aktivteil in dem Isolierharz in Rotation um eine Längsachse des Aktivteils versetzt. Während das Aktivteil rotiert, wird das Isolierharz aus dem Tränkbehälter abgeführt und danach wird die Ofentemperatur auf eine vorgegebene Ausbacktemperatur erhöht und für eine vorgegebene Ausbackdauer auf der Ausbacktemperatur gehalten. Erst nach dem Ablauf der Ausbackdauer wird die Rotation des Aktivteils beendet.

Bei dem erfindungsgemäßen Verfahren wird ein Auslaufen des Isolierharzes aus dem Aktivteil nach dem Vakuum-Druck-Imprägnieren erheblich reduziert, indem das Aktivteil während des Aushärtens des Isolierharzes in Rotation versetzt und gehalten wird. Besonders vorteilhaft wird das Aktivteil dabei bereits in Rotation versetzt, während es noch in das Isolierharz eingetaucht ist, und die Rotation wird während des Ablassens des Isolierharzes aus dem Tränkbehälter und während des Ausbackens in dem Ausbackofen aufrecht erhalten. Dadurch wird insbesondere verhindert, dass zwischen dem Ablassen des Isolierharzes und dem Beginn des Ausbackens eine Zeit vergeht, in der das Aktivteil nicht rotiert und in der dementsprechend mehr Isolierharz auslaufen kann, weil das Aktivteil beispielsweise nach dem Ablassen des Isolierharzes erst zu dem Ausbackofen transportiert, dann in dem Ausbackofen positioniert und schließlich an den Rotationsantrieb angeschlossen werden muss.

Bei einer Ausgestaltung des erfindungsgemäßen Verfahrens wird das Aktivteil in dem Tränkbehälter durch einen Kettentrieb in Rotation versetzt. Insbesondere kann vorgesehen sein, dass das Aktivteil durch zwei Ketten, über die das Aktivteil an einem Aktivteilträger aufgehängt wird, in dem Tränkbehälter gehalten und über wenigstens eine der beiden Ketten in Rotation versetzt wird. Diese Ausgestaltung des erfindungsgemäßen Verfahrens berücksichtigt, dass das Aktivteil erfindungsgemäß zu Beginn der Rotation noch in das Isolierharz eingetaucht ist. Ein Kettentrieb ist diesem Aspekt der Erfindung angepasst, da er eine einfache Übertragung eines Antriebsmoments auf das Aktivteil durch eine Kette vorsieht, die zudem bei einer Verschmutzung durch das Isolierharz kostengünstig ersetzt werden kann. Außerdem ermöglicht diese Ausgestaltung des erfindungsgemäßen Verfahrens gleichzeitig ein zweckmäßiges Aufhängen des Aktivteils an einem Aktivteilträger über Ketten, um das Aktivteil während des Vakuum-Druck-Imprägnierens und der nachfolgenden Rotation des Aktivteils in dem Tränkbehälter zu halten.

Bei einer weiteren Ausgestaltung des erfindungsgemäßen Verfahrens wird der Ausbackofen vor dem Einbringen des mit dem Isolierharz befüllten Tränkbehälters und des in dem Tränkbehälter angeordneten Aktivteils auf eine Vorheiztemperatur vorgeheizt, die kleiner als die Ausbacktemperatur ist. Dadurch kann der Ausbackofen vorteilhaft auf eine Temperatur vorgeheizt werden, bei der das Isolierharz eine für das Ablassen des Isolierharzes geeignete Viskosität aufweist.

Bei einer weiteren Ausgestaltung des erfindungsgemäßen Verfahrens wird die Ofentemperatur nach dem Ablauf der Ausbackdauer gemäß einem vorgegebenen Temperaturabnahmeverlauf auf eine Endtemperatur gesenkt. Dabei kann vorgesehen sein, dass die Rotation des Aktivteils erst beendet wird, nachdem die Ofentemperatur die Endtemperatur erreicht hat. Diese Ausgestaltung des erfindungsgemäßen Verfahrens ermöglicht ein gleichmäßiges und gesteuertes Abkühlen des Aktivteils und des Isolierharzes an der Spulenwicklung, um durch Temperaturunterschiede verursachte Spannungen in dem Isolierharz zu verhindern, die die Isolierung beschädigen können.

Eine erfindungsgemäße Vorrichtung zur Durchführung des erfindungsgemäßen Verfahrens umfasst einen Tränkbehälter, der eingerichtet ist, das Aktivteil aufzunehmen und mit dem Isolierharz befüllt zu werden bis das Aktivteil vollständig in dem Isolierharz eingetaucht ist, wenigstens ein mit dem Aktivteil verbindbares erstes Kettenrad und einen Aktivteilträger, der eingerichtet ist, das Aktivteil in dem Tränkbehälter zu halten, und der für jedes erste Kettenrad ein zweites Kettenrad aufweist, das mit dem ersten Kettenrad über eine Kette verbindbar ist, wobei wenigstens ein zweites Kettenrad von einem Antrieb antreibbar ist, um das Aktivteil in Rotation um seine Längsachse zu versetzen. Eine erfindungsgemäße Vorrichtung ermöglicht die Durchführung des erfindungsgemäßen Verfahrens mit den oben bereits genannten Vorteilen.

Bei einer Ausgestaltung der erfindungsgemäßen Vorrichtung ist jedes erste Kettenrad über wenigstens ein Verbindungselement lösbar mit dem Aktivteil verbindbar. Dadurch kann ein erstes Kettenrad vorteilhaft mehrfach verwendet werden, um Spulenwicklungen von Aktivteilen zu isolieren.

Eine weitere Ausgestaltung der erfindungsgemäßen Vorrichtung sieht zwei erste Kettenräder vor, die an sich entlang der Längsachse des Aktivteils gegenüberliegenden Seiten des Aktivteils mit dem Aktivteil verbindbar sind und über die das Aktivteil mit jeweils einer Kette an dem Aktivteilträger aufhängbar ist, um das Aktivteil in dem Tränkbehälter zu halten. Dabei kann vorgesehen sein, dass ein Abstand der beiden zweiten Kettenräder einstellbar ist. Dies ermöglicht das oben bereits erwähnte Aufhängen des Aktivteils an dem Aktivteilträger durch zwei Ketten. Eine Einstellbarkeit des Abstands der beiden zweiten Kettenräder ermöglicht ferner vorteilhaft, den Abstand der zweiten Kettenräder an den Abstand der ersten Kettenräder beziehungsweise an die axiale Ausdehnung des Aktivteils anzupassen und die erfindungsgemäße Vorrichtung somit für Aktivteile unterschiedlicher axialer Ausdehnungen zu verwenden.

Bei einer weiteren Ausgestaltung der erfindungsgemäßen Vorrichtung weist der Tränkbehälter einen Behälterboden mit einer Ablaufrinne auf, die in eine durch ein Absperrorgan verschließbare Behälteröffnung mündet. Dadurch wird vorteilhaft insbesondere das Auslassen des Isolierharzes aus dem Tränkbehälter erleichtert.

Eine weitere Ausgestaltung der erfindungsgemäßen Vorrichtung sieht einen Trägereinsatz vor, der gitterartig angeordnete Wände aufweist und derart an dem Aktivteilträger anordenbar ist, dass die Wände in das Isolierharz oberhalb des Aktivteils hineinragen, wenn das Aktivteil in dem Tränkbehälter in das Isolierharz eingetaucht ist. Dadurch kann vorteilhaft ein Aufschaukeln des Isolierharzes in dem Tränkbehälter, insbesondere während eines Transports des mit dem Isolierharz befüllten Tränkbehälters in den Ausbackofen, reduziert werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: eine perspektivische Darstellung eines Ausführungsbeispiels einer erfindungsgemäßen Vorrichtung zum Isolieren einer Spulenwicklung eines Aktivteils mit dem daran beziehungsweise darin angeordneten Aktivteil,
- FIG 2: eine perspektivische Darstellung des in FIG 1 gezeigten Aktivteils und mit dem Aktivteil verbundener erster Kettenräder,
- FIG 3: ein Ablaufdiagramm eines Ausführungsbeispiels des erfindungsgemäßen Verfahrens zum Isolieren einer Spulenwicklung eines Aktivteils.

Einander entsprechende Teile sind in den Figuren mit denselben Bezugszeichen versehen.

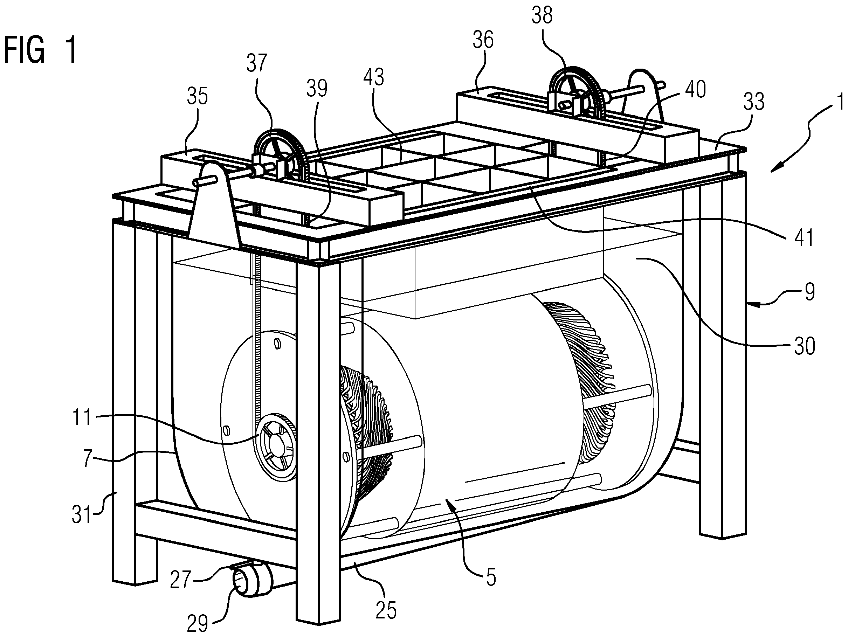

FIG 1 zeigt eine perspektivische Darstellung eines Ausführungsbeispiels einer erfindungsgemäßen Vorrichtung 1 zum Isolieren einer Spulenwicklung 3 eines Aktivteils 5 einer rotierenden elektrischen Maschine. Die Vorrichtung 1 umfasst einen Tränkbehälter 7, einen Aktivteilträger 9 und zwei erste Kettenräder 11, 12.

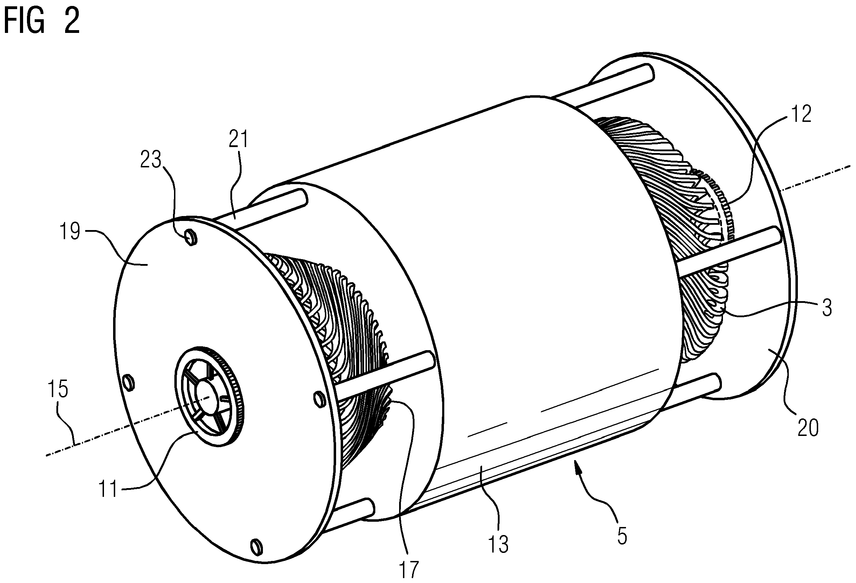

FIG 2 zeigt eine perspektivische Darstellung des in FIG 1 gezeigten Aktivteils 5 und der mit dem Aktivteil 5 verbundenen ersten Kettenräder 11, 12.

Das Aktivteil 5 weist ein Blechpaket 13 auf, das ringförmig um eine Längsachse 15 des Aktivteils 5 verläuft. Die Längsachse 15 definiert eine axiale Richtung. Das Blechpaket 13 weist axial verlaufende Nuten 17 auf, durch die gerade Abschnitte der Spulenwicklung 3 verlaufen, die an den beiden axialen Enden des Blechpakets 13 durch jeweils einen Wickelkopf der Spulenwicklung 3 zu Spulen verbunden sind. Die Nuten 17 sind durch (nicht dargestellte) Nutverschlusskeile verschlossen.

Die ersten Kettenräder 11, 12 sind auf sich axial gegenüberliegenden Seiten des Aktivteils 5 angeordnet und verlaufen jeweils um die Längsachse 15 herum. Jedes erste Kettenrad 11, 12 ist fest an einer Tragscheibe 19, 20 angeordnet, die durch als Verbindungsstangen ausgebildete Verbindungselemente 21 mit dem Blechpaket 13 verbunden ist. Die Tragscheiben 19, 20 sind durch Schraubverbindungen 23 lösbar mit den Verbindungselementen 21 verbunden.

Der Tränkbehälter 7 ist wannenfömig ausgebildet und weist einen Behälterboden mit einer Ablaufrinne 25 auf. Die Ablaufrinne 25 mündet in eine durch ein Absperrorgan 27 verschließbare Behälteröffnung 29 am tiefsten Punkt des Tränkbehälters 7. Der Tränkbehälter 7 ist mit einem Isolierharz 30 befüllt, so dass das Aktivteil 5 vollständig in das Isolierharz 30 eingetaucht ist.

Der Aktivteilträger 9 umfasst einen auf Trägerbeinen 31 angeordneten Trägerrahmen 33. Auf dem Trägerrahmen 33 sind zwei Trägerbalken 35, 36 angeordnet, an denen jeweils ein zweites Kettenrad 37, 38 angeordnet ist. Jedes zweite Kettenrad 37, 38 ist über eine Kette 39, 40 mit einem ersten Kettenrad 11, 12 verbunden. Die Trägerbalken 35, 36 können an verschiedenen Positionen am Trägerrahmen 33 befestigt werden, so dass der Abstand der zweiten Kettenräder 37, 38 dem Abstand der ersten Kettenräder 11, 12 beziehungsweise der axialen Ausdehnung des Aktivteils 5 angepasst werden kann.

In den Aktivteilträger 9 ist ein Trägereinsatz 41 eingesetzt, der gitterartig angeordnete Wände 43 aufweist. Die Wände 43 ragen in das Isolierharz 30 oberhalb des Aktivteils 5 hinein.

Das Aktivteil 5 ist mit den Ketten 39, 40 an dem Aktivteilträger 9 aufgehängt. Wenigstens ein zweites Kettenrad 37, 38 ist durch einen (nicht dargestellten) Antrieb antreibbar, um das Aktivteil 5 in Rotation um die Längsachse 15 zu versetzen.

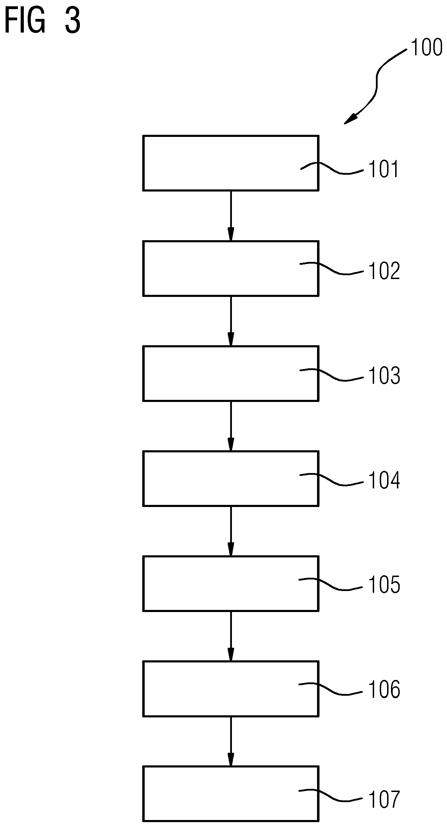

FIG 3 zeigt ein Ablaufdiagramm 100 eines Ausführungsbeispiels des erfindungsgemäßen Verfahrens mit Verfahrensschritten 101 bis 107 zum Isolieren der Spulenwicklung 3 des Aktivteils 5 unter Verwendung einer in FIG 1 gezeigten Vorrichtung 1.

In einem ersten Verfahrensschritt 101 wird das Aktivteil 5 in dem Tränkbehälter 7 durch Vakuum-Druck-Imprägnieren mit dem Isolierharz 30 getränkt. Dazu werden die Tragscheiben 19, 20 mit den Verbindungselementen 21 an dem Aktivteil 5 befestigt. Der Aktivteilträger 9 wird, beispielsweise mit einem Kran, über das Aktivteil 5 gehoben bis jedes erste Kettenrad 11, 12 in eine an einem zweiten Kettenrad 37, 38 aufgehängte Kette 39, 40 eingehängt werden kann. Nach dem Einhängen der ersten Kettenräder 11, 12 wird der Aktivteilträger 9 mit dem an ihm aufgehängten Aktivteil 5 angehoben und über dem Tränkbehälter 7 abgesenkt, so dass das Aktivteil 5 von dem Aktivteilträger 9 in dem Tränkbehälter 7 gehalten wird. Der Tränkbehälter 7 und der Aktivteilträger 9 werden anschließend miteinander verbunden, beispielsweise durch Schraubverbindungen. Der Tränkbehälter 7 und der Aktivteilträger 9 mit dem an ihm aufgehängten Aktivteil 5 werden dann in einen Druckkessel gefahren. Der Druckkessel wird verschlossen und evakuiert, und das Aktivteil wird eine vorgegebene Entgasungsdauer in dem evakuierten Druckkessel entgast. Gleichzeitig wird das Isolierharz 30 auf eine Vorheiztemperatur, beispielsweise auf etwa 70°C, erwärmt. Anschließend wird das erwärmte Isolierharz 30 in dem evakuierten Druckkessel durch die Behälteröffnung 29 in den Tränkbehälter 7 gepumpt bis der Füllstand des Isolierharzes 30 in dem Tränkbehälter 7 einen vorgegebenen Wert erreicht, bei dem das Aktivteil 5 vollständig in das Isolierharz 30 eingetaucht ist. Das Aktivteil 5 wird dann für eine Tränkdauer mit dem Isolierharz 30 getränkt. Daran anschließend wird der Druck in dem Druckkessel für eine Überdruckdauer auf einen Überdruck erhöht und anschließend wieder auf Normaldruck verringert.

In einem zweiten Verfahrensschritt 102 wird zunächst der Trägereinsatz 41 in den Trägerrahmen 33 eingesetzt. Anschließend werden der immer noch mit dem Isolierharz 30 befüllte Tränkbehälter 7 und der Aktivteilträger 9 mit dem an ihm in dem Isolierharz 30 aufgehängten Aktivteil 5 in einen auf die Vorheiztemperatur vorgeheizten Ausbackofen eingebracht.

In einem dritten Verfahrensschritt 103 wird das Aktivteil 5 in dem Isolierharz 30 in Rotation um die Längsachse 15, beispielsweise in eine Rotation mit einer Winkelgeschwindigkeit von etwa drei Umdrehungen pro Minute, versetzt, indem wenigstens ein zweites Kettenrad 37, 38 von dem Antrieb, beispielsweise über eine Kardanwelle, angetrieben wird.

In einem vierten Verfahrensschritt 104 wird das Isolierharz 30 aus dem Tränkbehälter 7 abgepumpt, während das Aktivteil 5 weiter in Rotation gehalten wird. Optional wird nach dem Abpumpen des Isolierharzes 30 eine großflächige Auffangwanne unter die offene Behälteröffnung 29 geschoben, um nachlaufendes Isolierharz 30, das beispielsweise von dem Aktivteil 5 abtropft, aufzufangen und großflächig zu verteilen, um eine Selbstentzündung des Isolierharzes 30 während des Ausbackens in einem fünften Verfahrensschritt 105 zu verhindern.

In dem fünften Verfahrensschritt 105 wird die Ofentemperatur auf eine vorgegebene Ausbacktemperatur, beispielsweise auf etwa 170°C, erhöht und für eine vorgegebene Ausbackdauer, beispielsweise für etwa acht Stunden, auf der Ausbacktemperatur gehalten.

In einem sechsten Verfahrensschritt 106 wird die Ofentemperatur gemäß einem vorgegebenen Temperaturabnahmeverlauf allmählich auf eine Endtemperatur gesenkt.

In einem siebten Verfahrensschritt 107 wird die Rotation des Aktivteils 5 beendet, nachdem die Ofentemperatur die Endtemperatur erreicht hat. Anschließend wird die abgekühlte Vorrichtung 1 demontiert und alle Komponenten der Vorrichtung 1, die mit dem Isolierharz 30 in Kontakt gekommen sind (der Tränkbehälter 7, die Kettenräder 11, 12, 37, 38, die Ketten 39, 40, die Tragscheiben 19, 20 und der Trägereinsatz 41) werden überprüft und gegebenenfalls gereinigt oder ersetzt. Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, die durch die beigefügten Ansprüche definiert ist.

## Patentansprüche

1. Verfahren zum Isolieren einer Spulenwicklung (3) eines Aktivteils (5) einer rotierenden elektrischen Maschine, wobei
- das Aktivteil (5) in einem wannenartigen Tränkbehälter (7) durch Vakuum-Druck-Imprägnieren mit einem Isolierharz (30) getränkt wird und das Aktivteil (5) nach dem Tränken mit dem Isolierharz (30) in dem mit dem Isolierharz (30) befüllten Tränkbehälter (7) vollständig eingetaucht in das Isolierharz (30) gehalten wird,
- anschließend der mit dem Isolierharz (30) befüllte Tränkbehälter (7) zusammen mit dem in ihm angeordneten Aktivteil (5) in einen Ausbackofen eingebracht wird und das Aktivteil (5) in dem Isolierharz (30) in Rotation um eine Längsachse (15) des Aktivteils (5) versetzt wird,
- während das Aktivteil (5) rotiert, das Isolierharz (30) aus dem Tränkbehälter (7) abgeführt wird und danach die Ofentemperatur auf eine vorgegebene Ausbacktemperatur erhöht und für eine vorgegebene Ausbackdauer auf der Ausbacktemperatur gehalten wird,
- und die Rotation des Aktivteils (5) nach dem Ablauf der Ausbackdauer beendet wird.

2. Verfahren nach Anspruch 1, wobei das Aktivteil (5) in dem Tränkbehälter (7) durch einen Kettentrieb in Rotation versetzt wird.

3. Verfahren nach Anspruch 2, wobei das Aktivteil (5) durch zwei Ketten (39,40), über die das Aktivteil (5) an einem Aktivteilträger (9) aufgehängt wird, in dem Tränkbehälter (7) gehalten und über wenigstens eine der beiden Ketten (39,40) in Rotation versetzt wird.

4. Verfahren nach einem der vorhergehenden Ansprüche, wobei der Ausbackofen vor dem Einbringen des mit dem Isolierharz (30) befüllten Tränkbehälters (7) und des in dem Tränkbehälter (7) angeordneten Aktivteils (5) auf eine Vorheiztemperatur vorgeheizt wird, die kleiner als die Ausbacktemperatur ist.

5. Verfahren nach einem der vorhergehenden Ansprüche, wobei die Ofentemperatur nach dem Ablauf der Ausbackdauer gemäß einem vorgegebenen Temperaturabnahmeverlauf auf eine Endtemperatur gesenkt wird.

6. Verfahren nach Anspruch 5, wobei die Rotation des Aktivteils (5) beendet wird, nachdem die Ofentemperatur die Endtemperatur erreicht hat.

7. Vorrichtung (1) zur Durchführung des Verfahrens nach einem der vorhergehenden Ansprüche, die Vorrichtung (1) umfassend
- einen Tränkbehälter (7), der eingerichtet ist, das Aktivteil (5) aufzunehmen und mit dem Isolierharz (30) befüllt zu werden bis das Aktivteil (5) vollständig in dem Isolierharz (30) eingetaucht ist,
- wenigstens ein mit dem Aktivteil (5) verbindbares erstes Kettenrad (11,12) und
- einen Aktivteilträger (9), der eingerichtet ist, das Aktivteil (5) in dem Tränkbehälter (7) zu halten, und der für jedes erste Kettenrad (11,12) ein zweites Kettenrad (37,38) aufweist, das mit dem ersten Kettenrad (11,12) über eine Kette (39,40) verbindbar ist, wobei wenigstens ein zweites Kettenrad (37,38) von einem Antrieb antreibbar ist, um das Aktivteil (5) in Rotation um seine Längsachse (15) zu versetzen.

8. Vorrichtung (1) nach Anspruch 7, wobei jedes erste Kettenrad (11,12) über wenigstens ein Verbindungselement (21) lösbar mit dem Aktivteil (5) verbindbar ist.

9. Vorrichtung (1) nach Anspruch 7 oder 8, mit zwei ersten Kettenrädern (11,12), die an sich entlang der Längsachse (15) des Aktivteils (5) gegenüberliegenden Seiten des Aktivteils (5) mit dem Aktivteil (5) verbindbar sind und über die das Aktivteil (5) mit jeweils einer Kette (39,40) an dem Aktivteilträger (9) aufhängbar ist, um das Aktivteil (5) in dem Tränkbehälter (7) zu halten.

10. Vorrichtung (1) nach Anspruch 9, wobei ein Abstand der beiden zweiten Kettenräder (37,38) einstellbar ist.

11. Vorrichtung (1) nach einem der Ansprüche 7 bis 10, wobei der Tränkbehälter (7) einen Behälterboden mit einer Ablaufrinne (25) aufweist, die in eine durch ein Absperrorgan (27) verschließbare Behälteröffnung (29) mündet.

12. Vorrichtung (1) nach einem der Ansprüche 7 bis 11, mit einem Trägereinsatz (41), der gitterartig angeordnete Wände (43) aufweist und derart an dem Aktivteilträger (9) anordenbar ist, dass die Wände (43) in das Isolierharz (30) oberhalb des Aktivteils (5) hineinragen, wenn das Aktivteil (5) in dem Tränkbehälter (7) in das Isolierharz (30) eingetaucht ist.

## Claims

1. Method for insulating a coil winding (3) of an active part (5) of a rotating electric machine, wherein
- the active part (5) is impregnated with an insulating resin (30) in a tub-like impregnation container (7) by vacuum pressure impregnation and after the impregnation with the insulating resin (30) the active part (5) is held completely submerged in the insulating resin (30) in the impregnation container (7) that is filled with the insulating resin (30),
- the impregnation container (7) that is filled with the insulating resin (30) together with the active part (5) that is arranged in said impregnation container is subsequently introduced into a baking oven and the active part (5) in the insulating resin (30) is set in rotation about a longitudinal axis (15) of the active part (5),
- while the active part (5) is rotating, the insulating resin (30) is purged from the impregnation container (7) and afterward the oven temperature is increased to a predetermined baking temperature and is maintained at the baking temperature for a predetermined baking period,
- and the rotation of the active part (5) is terminated after the expiration of the baking period.

2. Method according to claim 1, wherein the active part (5) is set in rotation in the impregnation container (7) by a chain drive.

3. Method according to claim 2, wherein the active part (5) is held in the impregnation container (7) by two chains (39, 40) and the active part (5) is fixed to an active part carrier (9) via said chains and said active part is set in rotation via at least one of the two chains (39, 40).

4. Method according to one of the preceding claims, wherein prior to the introduction of the impregnation container (7), which is filled with the insulating resin (30), and the active part (5) that is arranged in the impregnation container (7) the baking oven is preheated to a preheating temperature that is lower than the baking temperature.

5. Method according to one of the preceding claims, wherein after the expiration of the baking period in accordance with a predetermined temperature reduction curve the oven temperature is reduced to an end temperature.

6. Method according to claim 5, wherein the rotation of the active part (5) is terminated after the oven temperature has reached the end temperature.

7. Apparatus (1) for implementing the method according to one of the preceding claims, the apparatus (1) comprising
- an impregnation container (7) that is configured so as to receive the active part (5) and to be filled with the insulating resin (30) until the active part (5) is completely submerged in the insulating resin (30),
- at least one first chain wheel (11, 12), which can be connected to the active part (5), and
- an active part carrier (9) that is configured so as to hold the active part (5) in the impregnation container (7) and that has a second chain wheel (37, 38) for each first chain wheel (11, 12) and said second chain wheel can be connected to the first chain wheel (11, 12) via a chain (39, 40), wherein at least one second chain wheel (37, 38) can be driven by a drive in order to set the active part (5) in rotation about its longitudinal axis (15) .

8. Apparatus (1) according to claim 7, wherein each first chain wheel (11, 12) can be connected to the active part (5) in a detachable manner via at least one connecting element (21) .

9. Apparatus (1) according to claim 7 or 8, having two first chain wheels (11, 12) that can be connected to the active part (5) on sides of the active part (5) that lie opposite one another along the longitudinal axis (15) of the active part (5) and the active part (5) can be fixed to the active part carrier (9) with in each case a chain (39, 40) via said first chain wheels in order to hold the active part (5) in the impregnation container (7).

10. Apparatus (1) according to claim 9, wherein a spacing of the two second chain wheels (37, 38) can be adjusted.

11. Apparatus (1) according to one of claims 7 to 10, wherein the impregnation container (7) has a container base having a drainage channel (25) that issues into a container opening (29) that can be closed by a shut-off valve (27).

12. Apparatus (1) according to one of claims 7 to 11 having a carrier insert (41) that has walls (43), which are arranged in a lattice-like manner, and said carrier insert can be arranged on the active part carrier (9) in such a manner that the walls (43) protrude into the insulating resin (30) above the active part (5) if the active part (5) is submerged in the insulating resin (30) in the impregnation container (7).

## Revendications

1. Procédé d'isolation d'un enroulement (3) de bobine d'une partie (5) active d'une machine électrique tournante, dans lequel
- on imprègne la partie (5) active dans un récipient (7) d'imprégnation de type à cuvette par une imprégnation sous vide d'une résine (30) isolante et on immerge complètement la partie (5) active, après l'imprégnation par la résine (30) isolante, dans le récipient (7) d'imprégnation rempli de la résine (30) isolante et on la maintient dans la résine (30) isolante,
- ensuite, on introduit le récipient (7) d'imprégnation rempli de la résine (30) isolante ensemble avec la partie (5) active, qui s'y trouve, dans un four de cuisson et on met la partie (5) active dans la résine (30) isolante en rotation autour d'un axe (15) longitudinal de la partie (5) active,
- pendant que la partie (5) active tourne, on évacue la résine (30) isolante du récipient (7) d'imprégnation et ensuite on porte la température du four à une température de cuisson donnée à l'avance et on la maintient pendant une durée de cuisson donnée à l'avance à la température de cuisson,
- et on met fin à la rotation de la partie (5) active après l'expiration de la durée de cuisson.

2. Procédé suivant la revendication 1, dans lequel on met la partie (5) active en rotation dans le récipient (7) d'imprégnation par un entraînement par chaîne.

3. Procédé suivant la revendication 2, dans lequel on maintient la partie (5) active dans le récipient (7) d'imprégnation par deux chaînes (39, 40), par lesquelles on suspend la partie (5) active à un support (9) de partie active et on la met en rotation par au moins l'une des deux chaînes (39, 40).

4. Procédé suivant l'une des revendications précédentes, dans lequel on préchauffe à une température de préchauffage, qui est plus basse que la température de cuisson, le four de cuisson avant l'introduction du récipient (7) d'imprégnation rempli de la résine (30) isolante et de la partie (5) active, qui se trouve dans le récipient (7) d'imprégnation.

5. Procédé suivant l'une des revendications précédentes, dans lequel on abaisse à une température finale la température du four, après l'expiration de la durée de cuisson, suivant une courbe donnée à l'avance d'abaissement de la température.

6. Procédé suivant la revendication 5, dans lequel on met fin à la rotation de la partie (5) active, après que la température du four a atteint la température finale.

7. Dispositif (1) pour effectuer le procédé suivant l'une des revendications précédentes, le dispositif (1) comprenant
- un récipient (7) d'imprégnation, qui est agencé pour recevoir la partie (5) active et pour être rempli de la résine (30) isolante, jusqu'à ce que la partie (5) active soit immergée entièrement dans la résine (30) isolante,
- au moins une première roue (11, 12) à chaîne pouvant être reliée à la partie (5) active et
- un support (9) de partie active, qui est agencé pour maintenir la partie (5) active dans le récipient (7) d'imprégnation, et qui a, pour chaque première roue (11, 12) à chaîne, une deuxième roue (37, 38) à chaîne, qui peut être reliée à la première roue (11, 12) à chaîne par une chaîne (39, 40), dans lequel au moins une deuxième roue (37, 38) à chaîne peut être entraînée par un entraînement, afin de mettre la partie (5) active en rotation autour de son axe (15) longitudinal.

8. Dispositif (1) suivant la revendication 7, dans lequel chaque première roue (11, 12) à chaîne peut être reliée à la partie (5) active de manière amovible par au moins un élément (21) de liaison.

9. Dispositif (1) suivant la revendication 7 ou 8, comprenant deux premières roues (11, 12) à chaîne, qui peuvent être reliées à la partie (5) active sur des côtés de la partie (5) active opposés le long de l'axe (15) longitudinal de la partie (5) active et par lesquelles la partie (5) active peut être suspendue par respectivement une chaîne (39, 40) au support (9) de la partie active, afin de maintenir la partie (5) active dans le récipient (7) d'imprégnation.

10. Dispositif (1) suivant la revendication 9, dans lequel une distance entre les deux deuxièmes roues (37, 38) à chaîne est réglable.

11. Dispositif (1) suivant l'une des revendications 7 à 10, dans lequel le récipient (7) d'imprégnation comporte un fond de récipient ayant une rigole (25) d'évacuation, qui débouche dans une ouverture (29) du récipient pouvant être fermée par un organe (27) d'arrêt.

12. Dispositif (1) suivant l'une des revendications 7 à 11, comprenant un insert (41) de support, qui a des parois (43) disposées à la manière d'un treillis et qui peut être monté sur le support (9) de la partie active, de manière à ce que les parois (43) pénètrent dans la résine (30) isolante au-dessus de la partie (5) active, lorsque la partie (5) active est immergée dans la résine (30) isolante dans le récipient (7) d'imprégnation.
